# EUROPEAN PATENT APPLICATION

(11) **EP 1 486 696 A1**
(43) Date of publication of application: **15.12.2004**
(21) Application number: 03076808.9
(22) Date of filing: 11.06.2003
(51) Int. Cl.: F16F 1/36, B29C 67/00

(54) **Process for making a compression spring member from copolyetherester**

(71) Applicant: DSM IP Assets B.V., 6411 TE Heerlen (NL)
(72) Inventor: Koenen, Jacob, 6132 AH Sittard (NL); Lambi, Ronald John, 6163 ME Geleen (NL)
(74) Representative: Mooij, Johannes Jacobus

(57) **Abstract**

The invention relates to a process for making a compression spring member comprising the steps of making a preform from a copolyetherester composition; submitting the preform to at least one compression cycle, comprising the steps of applying a force to compress the preform in one direction to an extent greater than 30% of its original size and releasing the force from the compressed preform; wherein a copolyetherester composition is applied that comprises 1) at least 50 mass% of at least one copolyetherester consisting essentially of polyester hard segments that are built up from repeating units derived from at least one alkylene diol and at least one aromatic dicarboxylic acid and soft segments derived from a poly(propylene oxide)diol; and 2) 0,01 - 2 mass% of a nucleating agent. This process of making compression spring members shows better consistency and reproducibility. A further advantage is that an annealing step can be significantly reduced in time, or even be omitted.

The invention further relates to a compression spring member obtainable by said process, and to a compression spring assembly comprising at least one such compression spring member.

## Description

The invention relates to a process for making a compression spring member comprising the steps of
a) making a preform from a copolyetherester composition;
b) submitting the preform to at least one compression cycle, comprising the steps of
   b1) applying a force to compress the preform in one direction to an extent greater than 30% of its original size; and
   b2) releasing the force from the compressed preform.

The invention further relates to a compression spring member obtainable by said process, to the use of such spring members for making a compression spring assembly, and to a compression spring assembly comprising at least one such compression spring member.

Such a process is known inter alia from US 4198037. In this patent publication a process for making a compression spring member is described, which process comprises the steps of
i) making a preform from a copolyetherester composition;
ii) annealing the preform thus obtained, preferably for a period of at least 50 hours;
iii) submitting the preform to a single compression cycle, comprising the steps of applying a force to compress the preform in one direction to an extent greater than 30% of its original size; and subsequently releasing the compressed preform.
The initial step is to make a preform of the material, generally of a cylindrical form, optionally having a central core opening. Extruding a rod of the composition, and subsequently cutting the rod into individual blocks of the desired size may do such step. For large preforms, it may be more practical to use a casting process, wherein a mould is filled with molten material and subsequently cooled while applying a pressure. The copolyetherester composition applied in this process is described as to be a copolyester polymer containing randomly joined soft and hard segments as is known from, among others, US 3763109, US 3766146 and US 3651014. Specific reference is made to such polymers sold under the name Hytrel®, as having been made from three ingredients, namely (1) dimethyl terephthalate, (2) polyglycols such as polytetramethylene ether glycol, polyethylene ether glycol, or polypropylene ether glycol, and (3) short chain diols like butanediol and ethylene glycol. In the US 4198037 publication no more information concerning the copolyetherester composition is provided.

Such a copolyetherester per se would show physical properties that make it unsuitable for use as a compression spring, because of permanent deformation occurring when an article made thereof is compressed over about 10%. In order to overcome this, the process of US 4198037 teaches first to anneal the preform in step ii) at a temperature depending on the specific material, e.g. at about 120°C, for a period of time of at least 50 hours, preferably at least 64 hours. It is stated that the finished spring is more resilient the longer the annealing time. In the next step iii), the annealed preform is compressed in an axial direction to an extent such that its size in axial direction is reduced by at least 30%, preferably at least 50%. Subsequently, the applied force is released and the preform is allowed to recover from the compression. With this process a compression spring member is obtained that will not take significant permanent set when operating under conditions such that the spring is compressed substantially over 10 %.

The compression spring member obtained can be used in various spring assemblies, like draft gears or side bearings for railroad cars, crane or automobile bumpers, and shock or energy absorbers for various applications. Such spring assemblies and their manufacture have been the subject of series of patent publications, all referring to US 4198037 for the basic process of making the compression spring member, and disclosing improvements in the design of the preform or spring assembly, or in the methods of their manufacture.

A disadvantage of the known process described in US 4198037 is, that the process of making the spring member gives inconsistent results, like the preform occasionally already breaking during the compression cycle, or the spring member showing premature failure during quality testing of a compression spring assembly, for as yet unknown causes, but which are thought to be related to processing conditions during preform making.

It is therefore an object of the present invention to provide a process for making a compression spring member that does not show said disadvantage.

This object is achieved according to the invention with a process, characterized in that in step a) a copolyetherester composition is applied that comprises
1) at least 50 mass% of at least one copolyetherester consisting essentially of polyester hard segments that are built up from repeating units derived from at least one alkylene diol and at least one aromatic dicarboxylic acid and soft segments derived from a poly(propylene oxide)diol; and
2) 0,01 - 2 mass% of a nucleating agent.
The indicated mass% relates to the total copolyetherester composition.

The process according to the invention results in higher consistency and reproducibility in making compression spring members. No or hardly any uncontrolled breakage of a preform during the compression cycle, or premature failure of the spring member during quality testing mimicking its service in a spring assembly is observed. A further advantage of the process according to the invention is that the annealing step as prescribed by US 4198037 may be significantly reduced in time, or even be omitted at all. This results in a markedly faster process, and thus in significant cost savings. A further advantageous observation is that the process appears to be less sensitive to the starting viscosity, or molar mass, of the copolyetherester. Another advantage of the present invention is that the spring member obtained shows improved performance at low temperatures, for example below -20°C. The spring member obtained further shows excellent resistance to oils and greases.

In EP 0318788 A1 also a composition is disclosed comprising a copolyetherester having soft segments derived from a poly(propylene oxide)diol and a nucleating agent, but this publication does not describe or suggest applying such composition in a process for making compression spring members. The problem addressed in said publication is increasing crystallisation rate and/or reduction of moulding cycle time of a copolyetherester composition, and not improving the resistance to at least 30% compression of a preform made thereof, or the resistance to dynamic loading in a compression spring assembly.

A copolyetherester is also referred to as segmented copolyether ester, block copolyether ester, or thermoplastic copolyester elastomer. Such a segmented copolyetherester is understood to be a segmented copolymer containing hard polyester segments and soft segments derived from a flexible polyether; that is an aliphatic polyether that is substantially amorphous with a glass-transition temperature (T_{g}) of below 0°C.

The copolyetherester in the copolyetherester composition that is applied in the process according to the invention has polyether soft segments derived from a poly(propylene oxide)diol. Diol in poly(propylene oxide)diol is understood to mean that the poly(propylene oxide) has essentially hydroxyl groups as end groups; that is it has a hydroxyl functionality of about 1.7-2.3. A lower functionality would hamper synthesis of a copolyetherester of sufficiently high molar mass; a higher functionality would undesirably increase chain branching or even induce cross-linking of the copolyetherester. The hydroxyl functionality is therefore preferably 1.8-2.2, more preferably 1.9-2.1, and even more preferably about 2. Within the context of the present application a poly(propylene oxide) is understood to indicate a copolymer of propylene oxide and optionally another alkylene oxide with 1-6 carbon atoms, with propylene oxide constituting at least 50 mole%, preferably at least 60 mole% of the copolymer. Suitable other alkylene oxides are for example ethylene oxide, tetrahydrofuran or tetramethylene oxide, or neopentylene oxide. Preferably, tetramethylene oxide and/or neopentylene oxide are used as comonomers in a random copolymer with propylene oxide. The advantage of such copolymers is a low crystallinity and low T_{g}, resulting in good low temperature performance of a copolyetherester comprising these copolymers as soft segment. Preferably, the T_{g} of the polyether segment is below -20 °C, more preferably below -40, and most preferably below -50 °C.

In a preferred embodiment of the process according to the invention the copolyetherester composition contains at least 50 mass% of a copolyetherester with polyether soft segments derived from an ethylene oxide-terminated poly(propylene oxide)diol. With an ethylene oxide-terminated poly(propylene oxide)diol is indicated a tri-block copolymer with a poly(propylene oxide) as defined above as the central block, and two end blocks of poly(ethylene oxide). Advantages of such a polyether as soft block include its hydroxyl functionality and good reactivity and compatibility in the synthesis of polyether esters. The mass ratio of propylene oxide and ethylene oxide in this soft block may vary within a wide range, for example between 20:1 and 1:6, but is preferably between 10:1 and 1:1, more preferably between 5:1 and 1:1. Advantages of such a polyether segment include better properties of a copolyetherester at a wide temperature range and easier moulding behaviour. Without wishing to be bound to any theory, the inventors assume this may be related to better retention of crystallinity of the polyester hard segment in the copolyether ester.

The molar mass of the polyether segments may vary within a wide range, but preferably the molar mass is chosen between 400 and 6000, more preferably between 500 and 4000, and most preferably between 750 and 3000 g/mol. Advantage thereof is improved performance at low temperatures with retention of properties at elevated temperature.

The at least one copolyetherester in the copolyetherester composition that is applied in the process according to the invention contains hard segments that are built up from repeating units derived from at least one alkylene diol and at least one aromatic dicarboxylic acid or an ester-forming derivative thereof. The alkylene diol contains generally 2-6 C-atoms, preferably 2-4 C-atoms. Examples thereof include ethylene glycol, propylene diol and butylene diol. Preferably, 1,4-butylene diol is used. Examples of suitable aromatic dicarboxylic acids include terephthalic acid, 2,6-naphthalenedicarboxylic acid, 4,4'-biphenyldicarboxylic acid or combinations of these. The advantage thereof is that the resulting polyester is generally semi-crystalline with a melting point of above 150, preferably above 175, and more preferably of above 190°C. The hard segments may optionally further contain a minor amount of units derived from other dicarboxylic acids, for example isophthalic acid, which generally lowers the melting point of the polyester. The amount of other dicarboxylic acids is preferably limited to not more than 10, more preferably not more than 5 mol%, so as to ensure that, among other things, the crystallization behaviour of the copolyetherester is not adversely affected. The hard segment is preferably built up from ethylene terephthalate, propylene terephthalate, and in particular from butylene terephthalate as repeating units. Advantages of these readily available units include favourable crystallisation behaviour and a high melting point, resulting in copolyetheresters with good processing properties and excellent thermal and chemical resistance.

In other preferred embodiments of the process according to the invention, the hard segments in the copolyetherester are built up from units derived from ethylene glycol, 4,4'-biphenyldicarboxylic acid, terephthalic acid and/or 2,6-naphthalenedicarboxylic acid, and optionally minor amounts of other diacids and/or diols. These copolyetheresters show a high crystalline melting point, and fast crystallisation upon cooling from the melt.

The ratio of soft to hard segments in the copolyetherester may vary within wide limits, but is chosen such that a copolyetherester composition of desirable hardness is obtained. Preferably, the hardness of the copolyetherester and the copolyetherester composition is between 35 and 74 Shore D, more preferably between 40 and 60 Shore D. A copolyetherester of this hardness range generally results a good balance between low temperature performance, strength and elastic properties of the spring member obtained by the process according to the invention.

The copolyetherester can further contain a compound with two or more functional groups that can react with an acid- or hydroxyl-group, acting as chain extension or chain branching agent, respectively. Examples of suitable chain extension agents include carbonylbislactams, diisocyanates and bisepoxides. Suitable chain branching agents include e.g. trimellitic acid, trimellitic acid anhydride and trimethylol propane. The amount and type of chain extension or branching agent is chosen such that a block copolyetherester of desirable melt viscosity is obtained. In general, the amount of a chain branching agent will not be higher than 6.0 equivalents per 100 moles of dicarboxylic acids present in the copolyetherester.

Examples and preparation of copolyetheresters are for example described in Handbook of Thermoplastics, ed. O.Olabishi, Chapter 17, Marcel Dekker Inc., New York 1997, ISBN 0-8247-9797-3, in Thermoplastic Elastomers, 2nd Ed, Chapter 8, Carl Hanser Verlag (1996), ISBN 1-56990-205-4, in Encyclopedia of Polymer Science and Engineering, Vol. 12, Wiley & Sons, New York (1988), ISBN 0-471-80944, p.75-117, and the references cited therein.

The copolyetherester composition that is applied in the process according to the invention may further contain another thermoplastic polymer, preferably a relatively flexible polymer like another thermoplastic elastomer. The composition may for example contain another copolyester elastomer, like a copolyetherester of different hardness, or a copolyester of different chemical composition of the soft and/or hard segments. The copolyetherester composition may also contain a thermoplastic polyurethane (TPU). Other suitable polymers include block copolymers of styrene and conjugated dienes, e.g. butadiene, like SBS, or more preferably a substantially completely hydrogenated copolymer thereof, like SEBS. Such SEBS polymer may have been functionalised with polar groups, like acid or anhydride groups. Other suitable thermoplastic elastomers are thermoplastic vulcanisates, like those based on blends of polypropylene and cross-linked olefinic rubbers, like EPR- or EPDM-rubber. Also suitable are copolymers of olefins like ethylene with at least one polar comonomer, like (meth)acrylates, optionally with hydroxyl-, carboxyl-, or epoxy- functional groups. Examples thereof are for example given in WO 0063286 A1. If the at least one copolyetherester and other thermoplastic polymer are not compatible, the composition preferably also contains a suitable compatibilizer. The advantage of using a composition containing a copolyetherester and another polymer is that various properties may be further tuned to meet specific end-use requirements.

Preferably, the copolyetherester composition further contains a relatively polar polymer that is compatible with the copolyetherester, thus omitting the need for an additional compatibilizer.

The copolyetherester composition that is applied in the process according to the invention generally contains more than 50 mass%, based on the total mass of the composition, of the at least one copolyetherester, preferably more than 60 or even 70 mass%. This ensures that the copolyether ester forms a continuous phase of the composition, so that processing behaviour and properties like chemical and thermal resistance Will be mainly governed by the copolyether ester. In a special embodiment, the composition essentially contains the at least one copolyetherester, except from the nudeating agent and other additives.

The copolyetherester composition that is applied in the process according to the invention comprises at least 50 mass% of at least one copolyetherester and 0,01 - 2 mass% of a nucleating agent Nucleating agents are sometimes also referred to as crystallisation improvers or crystallisation promoters. In general, suitable nucleating agents for the present copolyetherester composition include those already known in the art, especially for polyesters, like poly(ethylene terephthalate). Suitable agents include inert particulate nucleating agents, metal salts of monocarboxylic acids and dicarboxylic acids; metal salts of aromatic carboxylic acids such as b enzoic acid, hydrous magnesium silicates such as talcum, and aluminium silicates such as clay; polyol acetals such as substituted sorbitol; metal salts of organophosphates such as sodium di(4-t-buty(phenyl) phosphate, and others. Suitable examples of metal salts of a carboxylic acids, are potassium, lithium or sodium salts. Preferably, a sodium salt of a carboxylic is chosen as nucleating agent in view of handling and effectiveness. Examples of such acids, the metal salts of which may be used as nucleating agents, include formic, acetic, propionic, butyric, valeric, caproic, caprylic, capric, lauric, itaconic, myristic. palmitic, stearic, oleic, linoteic, linolenic, cyclohexanecarboxylic, phenylacetic, benzoic, o-toluic, m-toluic, p-totuic, o-chlorobenzoic, m-chlorobenzoic, p-chtorobenzoic, o-bromobenzoic, m-bromobenzoic, p-bromobenzoic, o-nitrobenzolc, m-nitrobenzole, p-nitrobenzoic, phthalic, isophthalic, terephthalic, salicylic, p-hydroxybenzoic, anthranitic, m-aminobenzoic, p-aminobenzoic, o-methoxybenzoic, m-methoxybanzoic, p-methoxybenzoic (anisic), oxalic, malonic, succinic, glutaric, adipic, maleic and fumaric acid. Preferred metal salts of carboxylic acids include sodium stearate and sodium benzoate.

Also, fine mineral particles such as hydrous magnesium silicates (talcum) and hydrous aluminum silicates (day) function as inert particulate nucleating agents suitable for use in the practice of the present invention. Preferably, talcum of average particle size below 150 micrometer (µm), below 100 µm or even below 50 µm is chosen as nucleating agent. In a preferred embodiment of the process, talcum particles of particle size 0,01 - 40 µm are used, more preferably of particle size 0,01 - 25 µm, which particles have been melt-dispersed into a carrier material, preferably a copolyetherester, optionally in a concentration higher than the desired concentration in the copolyetherester composition. Such a concentrate of nucleating agent can be easily blended with at least one copolyetherester and optionally other additives to form a copolyetherester composition. The advantage of this concentrate route is a better control over dispersion of nucleating agent particles and homogeneous distribution thereof in the composition, which results in further improving the consistency and reproducibility of the process according to the invention.

Preferably, the copolyetherester composition that is applied in the process according to the invention comprises 0,02 - 1 mass% of nucleating agent, more preferably 0,05 - 0,5 or 0,07 - 0,25 mass%.

The copolyetherester composition may further comprise any customary additives, like heat- and UV-stabilisers, anti-oxidants, colorants, processing aids like mould release agents or melt-flow enhancers, or mineral fillers. Preferably, the composition contains an effective amount of a heat-stabilisation and anti-oxidant package in view of the relatively long residence times in the melt, that are encountered during making of a preform. Generally, the total amount of such additives is less than 10 mass%, preferably about 0,05 - 5 or 0,1 - 3 mass% based on the total composition is applied.

The copolyetherester composition that is applied in the process according to the invention may have a viscosity that can vary within wide limits. The viscosity of copolyetheresters is generally expressed in solution viscosities, for example in a relative solution viscosity (RSV). The copolyetherester composition generally has a RSV, as measured on a 1 mass% solution of the copolymer in m-cresol at 25°C, of between 2.0 and 4.0, preferably between 2.2 and 3.5, and more preferably between 2.4 and 3.0. It has been observed that in the process according to the invention a relatively wide range of viscosities may be used, in contrast to prior experience with other copolyetherester compositions.

The copolyetherester composition that is applied in the process according to the invention can be made by any of the well-known techniques for preparing polymer compositions and blends, including both dry-blending and melt-blending methods. Suitable devices for melt-blending include single-screw or twinscrew extruders. The components of the composition may also be mixed as particles directly prior to casting or extruding into a preform, provided care is taken to ensure uniform blending. In the last case, the nucleating agent is preferably mixed with copolyether ester in the form of a concentrate in an appropriate carrier polymer. In a preferred embodiment, at least the nucleating agent and the at least one copolyether ester are melt-blended before making a preform; more preferably all components forming the copolyetherester composition are melt-blended to obtain a homogeneous composition.

In the process according to the invention, a preform is made in step a) from the copolyetherester composition via any known melt-processing technique. The form and dimensions of the preform may vary widely, and depend on the desired compression spring and assembly. Generally, the starting form is of cylindrical shape, with diameter of up to about 15 cm and height of up to about 10 cm. Such thick-walled articles are preferably produced either by casting into a mould; or by first extruding a cylindrical rod or stock shape, and cutting this into the desired length (height). The preform may be a solid body, but in several cases a hollow body, e.g. with a central bore or core opening is preferred, see for example US 4566678, US 4997171, US 5141697, US 5326083, US 5957441 or US 6250617. The outer wall of the preform may be straight, but also have circumferential bands of increased cross section. In WO 01/34995 A1 a process for making a compression spring member is described, wherein a preform is provided with central recesses during the subsequent compression. US 5868384 discloses a process wherein a composite compression spring is made by combining a first tubular member made from a first composition, and a second surrounding tubular member made from a second composition of different Shore D hardness.

The preform thus obtained may be annealed during a certain time at elevated temperature below the melting point of the components of the composition to increase resilience of the spring member, as described in a.o. US 4198037. The present inventors, however, found that with the process according to the invention the annealing time can be significantly reduced, or that such annealing step is not even necessary anymore. The process according to the invention further comprises an annealing step in which the preform is annealed during 0 - 30 hours at a temperature below the melting point of the components of the composition, Preferably, the annealing time is less than 20, less than 10, or even less than 5 hours. In a special embodiment, the process according to the invention does not comprise an annealing step. Omission of an annealing step greatly reduces total time of the process.

In the next step of the process according to the invention the preform is submitted to at least one compression cycle, comprising the steps of first applying a force to compress the preform in one direction to an extent greater than 30% of its original size; and than releasing the compressed preform again. This results in permanent deformation of the preform, called compression set; but upon a next compression of lesser extent and subsequent release the member will virtually completely return to its size before this second compression. As is described in US 4198037 and other above-cited publications, the compression in this step of the process according to the invention is preferably at least 40%, more preferably at least 50%. The higher the compression applied, the better the resilience of the spring element in a compression spring assembly. Such high compression is, however, not always practical to apply in view of the high forces concerned. The compression step may also comprise a series of repetitive compression cycles, in which the compression is increased with each step and released again, as described in US 6141853. The at least one compression cycle is generally applied to the preform in combination with metal plates and the like, so as to form compression spring elements that can readily be combined in to a compression spring assembly, as is described in US 4198037, US 4566678, US 4997171, US 5141697, US 5326083, US 5957441 or US 6250617, WO 01/34995 A, or US 6141853. Such spring assemblies are often stacks of the compression spring member separated by steel plates.

The invention further relates to a compression spring member obtainable by the process according to the invention. The compression spring member shows better consistency and better performance in a spring assembly that is used under dynamic loading. Until now, it proved in fact not possible to compress a preform made from a copolyetherester composition comprising at least one copolyetherester consisting essentially of polyester hard segments that are built up from butylene terephthalate repeating units and soft segments derived from an ethylene oxide-terminated poly(propylene oxide)diol to an extent of over 30% without breakage.

The invention therefore also relates to the use of compression spring members obtainable by the process according to the invention for making compression spring assemblies of various designs and sizes. Examples of such compression spring assemblies include draft gears or side bearings for railroad cars, crane or automobile bumpers, and shock or energy absorbers for various applications, like vehicle strut assemblies.

The invention thus also relates to a compression spring assembly comprising at least one compression spring member obtainable by the process according to the invention.

The invention will now be further elucidated with the following Examples and comparative experiments.

### Example 1

A copolyetherester composition consisting of a copolyetherester of hardness 58 Shore D, with hard segments that are built up from butylene terephthalate repeating units and of soft segments derived from an ethylene oxide-terminated poly(propylene oxide)diol having a molar mass (Mₙ) of about 2300 g/mol and propylene oxide / ethylene oxide ratio of about 2/1, having a relative solution viscosity of 2.8 (RSV, as measured on a 1 mass% solution of the copolymer in m-cresol at 25°C); 1 mass% of a heat-stabilisation package; and 0.1 mass% of a micro-talcum of particle size 0.5 - 15 µm was prepared by melt-blending the components on a twinscrew extruder at 225-235°C, and forming into pellets. The composition was subsequently extruded on a 45 mm single screw extruder with temperature settings 230-240 °C into a solid cylindrical rod of about 110 mm diameter. After cooling to roomtemperature this stock shape was cut and machined into individual blocks of about 100 mm height.

The obtained block was annealed during 50 hours at 125 °C in an oven, applying a heating and cooling rate of about 10°/hour. The block was not removed from the oven until the temperature was below 50°C. Thereafter the block was placed in a press at room temperature, and was compressed about 70 % in about 2 seconds. Subsequently the compression force was released. A compression set of about 50 % was observed. The block of material did not break or show cracks or crazes on its surface.

The experiment was repeated 4 times; and again no failure occurred.

### Example 2

Example 1 was repeated, but without annealing the block of material before compression. Again, in none of the tests breakage or crazing was observed.

### Example 3

Analogously to Example 2, compression tests were performed on preforms made from a similar copolyetherester composition, except that the copolyetherester had a RSV of 2.5. Again, no breakage or crazing was observed.

### Comparative experiment A

Example 1 was repeated, but in this case the copolyetherester composition did not contain talcum or another nucleating agent. Already during applying a compression force, the block broke into pieces. The same experiment was repeated another 4 times with the same result.

## Claims

1. Process for making a compression spring member comprising the steps of
a) making a preform from a copolyetherester composition;
b) submitting the preform to at least one compression cycle, comprising the steps of
b1) applying a force to compress the preform in one direction to an extent greater than 30% of its original size; and
b2) releasing the force from the compressed preform; **characterized in that** in step a) a copolyetherester composition is applied that comprises
1) at least 50 mass% of at least one copolyetherester consisting essentially of polyester hard segments that are built up from repeating units derived from at least one alkylene diol and at least one aromatic dicarboxylic acid and soft segments derived from a poly(propylene oxide)diol; and
2) 0,01 - 2 mass% of a nucleating agent.

2. Process according to claim 1, wherein the soft segments are derived from an ethylene oxide-terminated poly(propylene oxide)diol.

3. Process according to claim 2, wherein the ethylene oxide-terminated poly(propylene oxide)diol contains propylene oxide and ethylene oxide in a mass ratio of between 10:1 and 1:1.

4. Process according to any one of claims 1-3, wherein the polyester hard segments are built up from butylene terephthalate repeating units.

5. Process according to claim 1, wherein the copolyetherester composition comprises
1) at least one copolyetherester consisting essentially of polyester hard segments that are built up from butylene terephthalate repeating units and soft segments derived from an ethylene oxide-terminated poly(propylene oxide)diol;
2) 0,02 - 1 mass% of a nucleating agent; and
3) 0,1 - 3 mass% of other additives comprising at least an effective amount of a heat-stabilisation and anti-oxidant package; the total of 1) - 3) amounting 100 mass%.

6. Compression spring member obtainable by the process according any one of claims 1-5.

7. Use of a compression spring member obtainable by the process according to any one of claims 1-5 for making a compression spring assembly.

8. Compression spring assembly comprising at least one compression spring member obtainable by the process according any one of claims 1-5.
